# EUROPEAN PATENT SPECIFICATION

(11) **EP 0 965 192 B1**
(45) Date of publication and mention of the grant of the patent: **28.02.2007**
(21) Application number: 98901169.7
(22) Date of filing: 05.01.1998
(51) Int. Cl.: H04H 9/00, H04N 7/173

(54) **METHOD AND SYSTEM FOR TRACKING NETWORK USE**
METHODE UND SYSTEM ZUR NETZWERKVERWENDUNGSERFASSUNG
PROCEDE ET SYSTEME DE SUIVI DE L'UTILISATION DES RESEAUX

(30) Priority: 06.01.1997 US 779306
(43) Date of publication of application: 22.12.1999
(73) Proprietor: BellSouth Intellectual Property Corporation, Wilmington, DE 19801 (US)
(72) Inventor: GRAUCH, Edward, Rowland, Atlanta, GA 30306 (US); BATTEN, John, Christopher, Alpharetta, GA 30202 (US); DANNER, Fred, Thomas, III, Colorado Spring, Colorado 80906 (US)
(74) Representative: Weston, Robert Dale
(86) International application number: PCT/US1998/000091
(87) International publication number: WO 1998/031114

(56) References cited:
- WO-A-94/17609
- US-A- 5 374 951

## Description

This invention is a method and system for tracking subscriber use of network applications, particularly network applications involving delivery of interactive media or video programming.

Broadcast and cable television have long dominated the visual media market. New communications technologies, however, have accelerated demand for new types of media such as video on demand, interactive video, interactive gaming, home shopping or interactive advertising. Unlike broadcast television, viewers of these services typically are paying "subscribers," although payments from advertisers also pay a large share of the costs of providing these media services.

Document US-A-4,566,030 relates to a system and method for remote monitoring of a viewer's television set in order to accumulate data illustrating viewing habits such as channels watched at particular times. Accumulated data is then forwarded via telephone lines to a central location for analysis.

Document US-A-5,374,951 relates to a system for monitoring and recording as data television program viewing habits utilizing a plurality of remote program monitor units in panellist households and automatically periodically reporting such data to a central computer via a conventional telephone network. The "program viewing report disclosed in US-A-5374951 (see column 14, line 55- column 15, line 7)" requires that a PMU 8 "contain a character string table" that includes (1) "a character string" and (2) "a shorter unique program identification code (PIC)." The programming report specifies how many households in the panel had their television sets tuned to a predetermined program on a specific date and time or during a preselected time period. Further, the monitored event is limited to (1) converter turned off or (2) converter turned on and tuned to a channel for a minimum length of time. The PMU "processes the television signal on line 7 to extract character strings that are embedded in the television signal and then searches the character string table for a match. If a match of character strings is detected, the present time on a system clock 41 and a program identification code for the commercial are stored in an event log in the RAM 20. If NO MATCH is found the system ignores the decoded character string and no new data is stored in the event log (see column 5, lines 55-60 in US-A-5374951). The "programming viewing report" 224 specifies "how many households in the panel had their television sets tuned to a predetermined program on a specific date and time or during a preselected time period. To generate this report a computer operator merely enters the PIC and the desired time period into the report generating software. The software then automatically retrieves all records from the viewing table that contain the [1] selected PIC and [2] meet the requirement of the specified time period. The output would be a tabulation of the households that viewed the program and the number of times it was viewed by each household during the selected time period" (see column 14, line 57 thru column 15, line 7 in US-A-5374951).

None of the systems attempt to match "raw" information on channels viewed with programming information. Nor do those systems match viewing pattern information with demographics information about the particular users in order to provide more "targeted" advertising.

According to the present invention a method of collecting and processing information about subscriber selection and use of programming distributed over an interactive media delivery network (53) that allows duplex communication to a set top box coupled to a subscriber's display device, the method comprising the steps of:-
a) collecting information about subscriber selection and use of the distributed programming to the set top box,
b) merging the information to derive event timelines, describing the programming selected by a particular subscriber over a particular time period;
c) the collecting step comprising:
   i) identifying commands of interest selected from the subscriber during communication of the programming to the set top box; the selected command comprising an event associated with an application residing on the set top box;
   ii) forming an event record comprising an application identification of the application residing on the set top box, an event of interest associated with the application identification, and a time when selecting the event of interest from the subscriber to the set top box;
d) transmitting the event record to a merge processor (90) via the media delivery network (52); and,
e) merging the event record at the selected time with programming metadata describing programming available via the media delivery network at the selected time to derive an event timeline describing the selection and use of the distributed programming by the subscriber for a discrete time period.

Also according to the present invention, a subscriber information system for collecting and processing information about subscribers' selection and use of programming distributed over an interactive media delivery network (52) that allows duplex communication to a set top box coupled to a subscriber's display device, the system (20) comprising:
a) collector processors (34) having means (36, 42, 44) to collect a plurality of event records, each event record comprising at least one of a selected command from a subscriber during communication of the programming to the set top box, the selected command comprising an event associated with an application residing on the set top box, the event comprising an application identification associated with the application, an event identification of the event of interest associated with the application identification and a time when selecting the event of interest, and
b) a merge processor (90) to receive the event records, and arranged to derive event timelines (92), describing the selection and use of the distributed programming by the subscriber over a discrete time period;
   wherein
c) the collector processors (34) are each part of the set top box (30) and include means (38, 40, 41) to transmit event records (80);
d) communications means (38, 40, 41) are connected to each set top box; and,
e) the merge processor (90) is connected to the communications means to receive the transmitted event records;
wherein the merge processor forms the event timeline (92) describing a subscriber's selection and use of distributed programming for a discrete time period by merging the event records (80) with programming metadata (82, 84, 86, 88) describing programming available via the media delivery network at the selected time, the programming metadata comprising at least one of a content identification of the programming, a start time of the programming, an end time of the programming and a channel identification.

The event record includes a time when selecting an event of interest and an application identification (e.g., cable television application that handles subscriber remote controls, electronic programming guide, interactive game, video on demand, company specific applications, a navigator application, etc.).

Further features of the present invention are set forth in appended method claims 2 to 10, system claims 12 to 20, and computer program claims 21 and 22 .

The above and other features of the present invention are illustrated, by way of example, in the Drawings, wherein:-
Figure 1 shows a block diagram of elements of one embodiment of the system of the present invention.
Figure 2 shows a block diagram of a Set Top Box as used with the embodiment of the present invention shown in Figure 1 and provided with a clickstream processor.
Figure 3 shows a schematic diagram showing the upload cycle for collected event data.
Figures 4A and 4B show the upload of collected event data from a selected Set Top Box through the network to the staging server shown in Figures 1 and 5.
Figure 5 shows an overview of the staging server, its functions and its interconnections with various data sources.
Figure 6A shows the system elements required for merging and parsing the event and content data collected by the present invention.
Figure 6B shows the assignment of priority to content data necessary for completing the merge and parse process.
Figure 7 shows the results of a merge and parse process of the present invention.

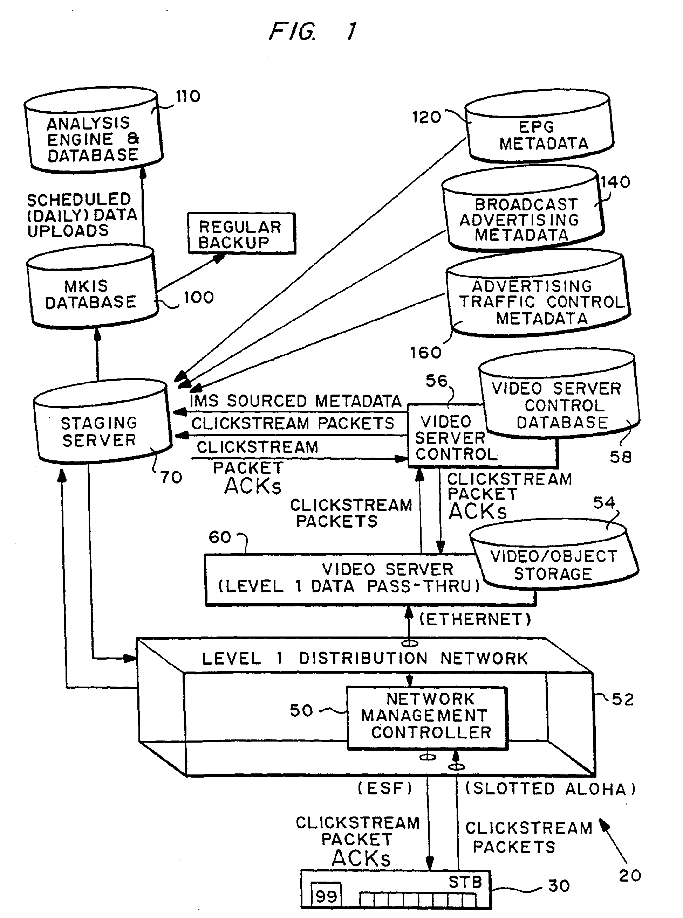

Figure 1 shows a block diagram of the components of the system 20. System 20 is a demographics and programming ratings collection and analysis system that may be deployed for use on an interactive media delivery system such as the Interactive Video Services Network^{™} deployed by BellSouth Interactive Media Services^{™}. However, persons skilled in the art will recognise that the present invention may be used with any of a variety of interactive media delivery systems, standard or wireless cable television systems, satellite television systems or other media delivery systems that allow duplex communication (perhaps with the return path via a separate (e.g., telephone) network) to a set top box ("STB") 30 coupled to a subscriber's display device, such as a television set or the like.

In any event, Figure 1 shows various system 20 elements and subsystems that communicate with each other to transmit collected information, data error detection schemes and data acknowledgements. Briefly, the STB 30 communicates through a distribution network 52 with a video server 60, such as a video transfer engine ("VTE"), that may be acquired from Hewlett Packard^{™} ("HP"), with a video/object storage database 54. Video server 60 couples to a video control server 56, such as an Inter Media Server available from Sybase^{™} and deployed on a platform such as an HP 9000^{™}, with a database 58. The video server control 56 controls video server 60 and also logs information about video server 60 use. A staging server 70 receives collected records of events of interest. These "event records" pass through the video server control 56, which also couples to a Marketing and Information System ("MKIS") 100 that couples to staging server 60, which receives (1) the event records and (2) content data from various sources 120, 140 and 160 identified in Figure 1 and which describe programming content available through the interactive network to all subscribers. MKIS 100 may be coupled to a third party search and analysis system 110 that can provide customer support operations.

STB 30 provides a platform by which (1) content is converted to a selected video format (e.g., NTSC or PAL) and presented to the subscriber or (2), for interactive systems, messages are exchanged (including video data) over a network 52 with the staging server 70. STB 30 also could include platforms capable of: (1) receiving messages from a user input device, such as a hand-held remote control unit; (2) translating video signals from a network-native format into a format that can be used by the television or display device; (3) inserting alphanumeric or graphical information into the video stream in order to "overlay" that information on the video image; (4) providing graphic or audio feedback to a user; or (5) possibly the most basic function, simply routing a traditional broadcast signal to a viewing device connected to the STB 30. Analogous terms to STB include: Set-Top Terminal ("STT"), Cable Converter, and Home Communications Terminal ("HCT") and any of these devices may be coupled to or made a part of a display device for showing programming to subscribers. Generally, STB 30 may be a Richmond^{™} or 8600X^{™} available from Scientific Atlanta^{™}, a CFT 2200^{™} available from General Instruments^{™}, Thomson's DSS^{™} or any other device equipped with (1) a microprocessor; (2) memory for operating instructions and storage; and (3) a control interface for accepting subscriber commands from a remote control device or control panel.

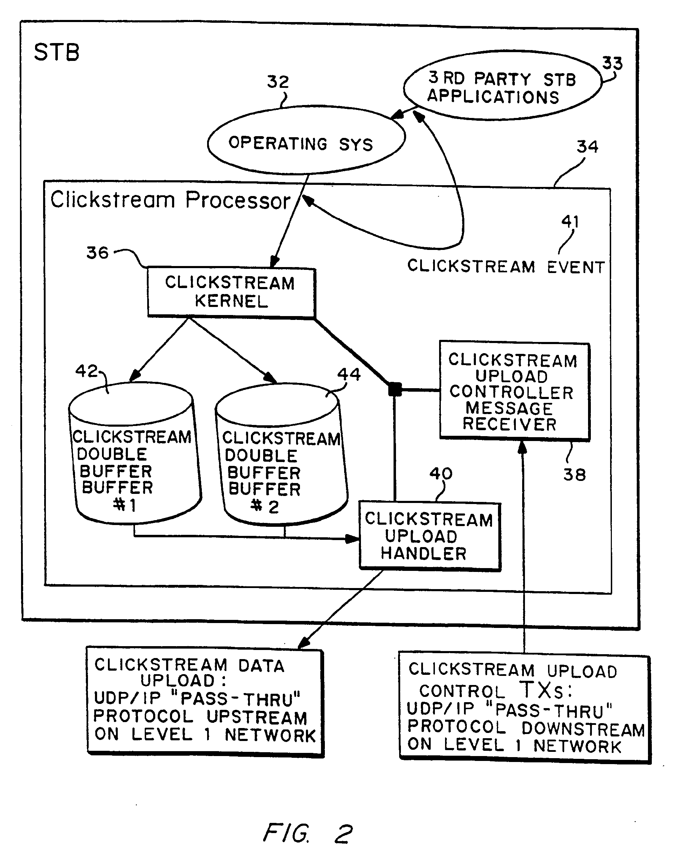

For the particular embodiment of system 20 shown in the Figures, collected event records that are packaged for transport through system 20 are called "clickstream" data or information. Figure 2 shows a clickstream processor 34 that resides in the memory, such as DRAM or the like, of an STB 30 and which has a clickstream kernel 36, buffers 42 or 44, a clickstream upload handler 40, a clickstream controller 38 and a clickstream event API (application programming interface) 41.

Briefly, the clickstream kernel 36 buffers events passed to it by various network applications through the clickstream event API 41. Clickstream controller 38 accepts control messages from staging server 70 and appropriately stores their payload. Typical messages may be sent over the Extended Super Frame ("ESF") pass-through data link and control the uploading of clickstream data. Clickstream upload handler 40 accepts control messages over the system 20, which messages control the uploading of collected clickstream data over the reverse path through network 52. Also, the clickstream upload handler 40 stores the payload of these messages in appropriate and available memory and accepts the messages sent to it to acknowledge the receipt of uploaded clickstream data.

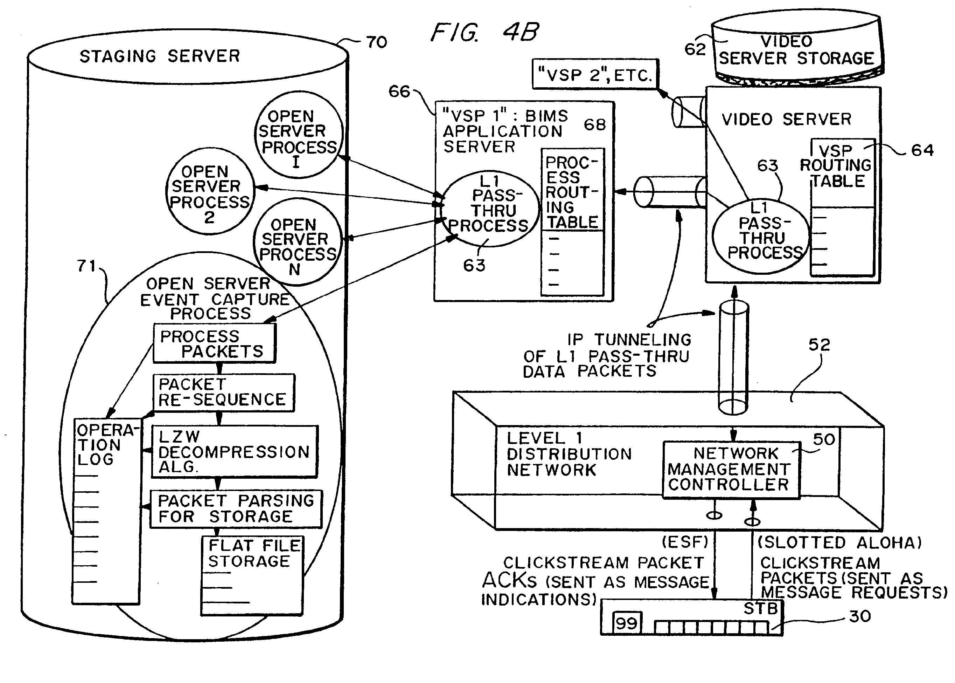

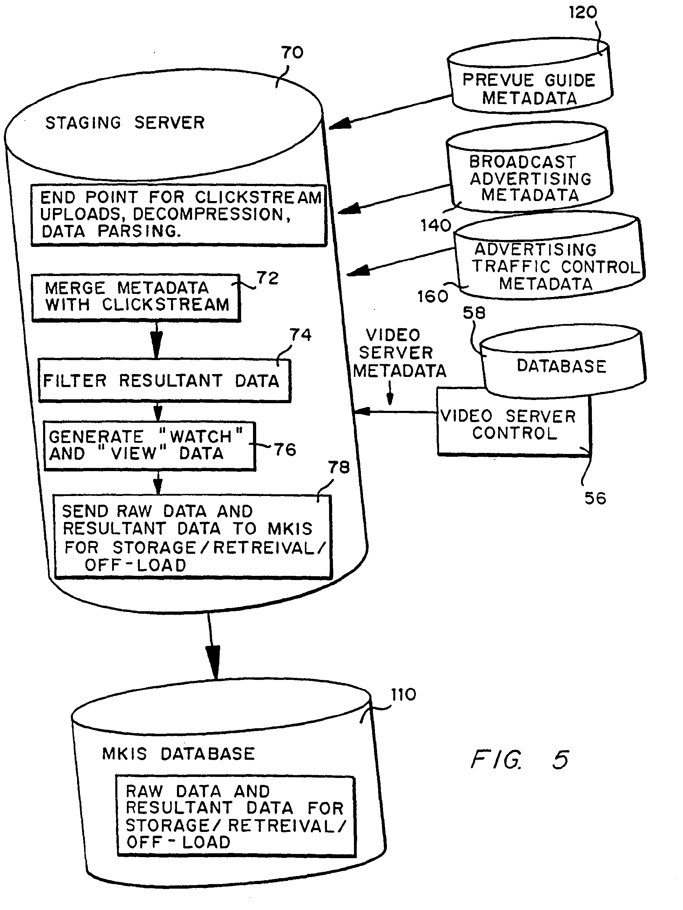

Referring again to Figure 1, video server 60 provides information from video/object storage 54 to the particular interactive system over which system 20 is deployed. Clickstream data collected at STBs 30 can be uploaded to staging server 70 in any number of ways. For instance, Figure 1 shows that the distribution network 52 could couple directly to staging server 70, allowing clickstream data packets sent from STBs 30 to be forwarded to staging server 70 directly and for staging server 70 to then return via the network 52 data acknowledgements. A network management controller 50 controls the flow of information through the network 52. Alternatively, Figure 1 and, in greater detail, Figure 4B, show that clickstream data packets may be sent to the distribution network 52 to the video server 60. Video server 60 passes through both clickstream data uploads from various STBs 30 and data acknowledgements returned to the STBs 30. A communications router inside the video server 60 redirects traffic to the appropriate destination. Video server control 56 similarly acts as a pass-through device for STB 30 clickstream data going to the staging server 70 and as a pass-through device for staging server 70 data acknowledgements to the STBs 30. Also, video server control 56 may provide log information that identifies interactive applications invoked by particular STBs 30. That log information is provided to the staging server 70 so that video server control 56 also acts as another data source about content available over the network, like EPG metadata source 120, broadcast advertising metadata source 140, or advertising traffic control metadata source 160. Staging server 70 collects all such clickstream data and content data, analyses and then forwards it to MKIS database 100 or to a third-party analysis engine and database 110, as described in more detail in the text associated with Figures 5-7.

Clickstream processor 34 collects information to create a "journal" or log about all events or selected events of interest. An event is an action or a change in the state of a STB 30 that is deemed important to building a knowledge base on subscribers or their viewing patterns. For example, an event can include key presses to change channels or volume, mute, to enter the navigator for the interactive system, to turn the STB 30 off or on, to fast forward, to pause or to rewind a video obtained via the video on demand application. The events include applications called by the subscriber, such as interactive gaming applications, an electronic program guide, a video on demand or near video on demand application, a home-shopping application or a particular company's interactive application, such as The Weather Channel's weather on demand^{™}, World Span's travel on demand^{™} or Light Span's^{™} educational interactive application. Events include subscriber use of and control commands to peripheral devices coupled to the STB 30 or a subscriber's display device, such as a VCR or videodisk player.

Each application residing on the STB 30 interfaces with the clickstream processor 34 to send selected data for maintaining a desired journal. Assuming that the system 20 is used with an interactive system, many different applications may be deployed over that system and may be triggered by the subscriber. Some fairly typical applications that might be invoked include:
- a cable television application that handles subscriber remote controls (like channel or volume changes);
- an electronic programming guide application such as TV Data^{™}, Prevue^{™} or Star Sight^{™} interactive services;
- an interactive game;
- a video on demand or near video on demand application;
- company specific applications, that might be offered by content provider such as the Weather Channel^{™}, MTV^{™}, Showtime^{™}, etc.; or
- a navigator application to help the user choose options. Each of these applications, as well as some internal applications that the system 20 may wish to monitor, will be assigned a unique application identifier.

Clickstream processor 34 interfaces with the various applications resident in the STB 30's operating system 32 and any third party applications 33. Note that for systems using other types of STB 30's than the embodiment described in the Figures, those STB 30's need not have an operating system. Instead, all instructions can be written directly to the memories of those particular STBs. Applications 33 can be added by either downloading entirely new software directly to memory or by downloading new tables as described below.

When an application 33 reaches a point where an "event" of interest has been generated, the application 33 stores an event record to memory. The application 33 then launches to the clickstream kernel 36 the event record, including information such as: (1) the application's 33 identification code (e.g., the "Cable Television Application" or a particular interactive application); (2) a count of the amount of information (number of bytes) to be journalled; (3) a "time stamp" that defines a unique point in time, e.g., by defining the date and time of day, accurate to the hour, minute or second; (4) an identification code for the event, or (5) where the event data was stored. Clickstream kernel 36 uses the information provided by the applications 33 to collect the event data, format it and place it into a buffer 42 or 44. Table I shows the type of information that will be generally sent by the clickstream processor 34 to the buffers 42 or 44.

| **Table I: Application Event Record** | **Size** |
|---|---|
| Timestamp | 6 bytes |
| Assigned Application ID | 16 bits |
| Number Bytes to Follow (length) | 8 bits |
| Application Specific Data with customised formats and lengths | Multiple Bytes |

Global table II defines events of interest that each application can identify, collect, store in the "Application Specific Data" field and notify the clickstream kernel 36. These events could be as simple as a broadcast channel change by pressing the "Chan Up" remote key. All of these event types can be accessed and used by each application. While each application may not use every possible event type, the number of events available for collection allows system 20 to extract any pertinent usage information for analysis. Also, the use of the global table II increases system 20 efficiency because event types can be modified, added or removed.

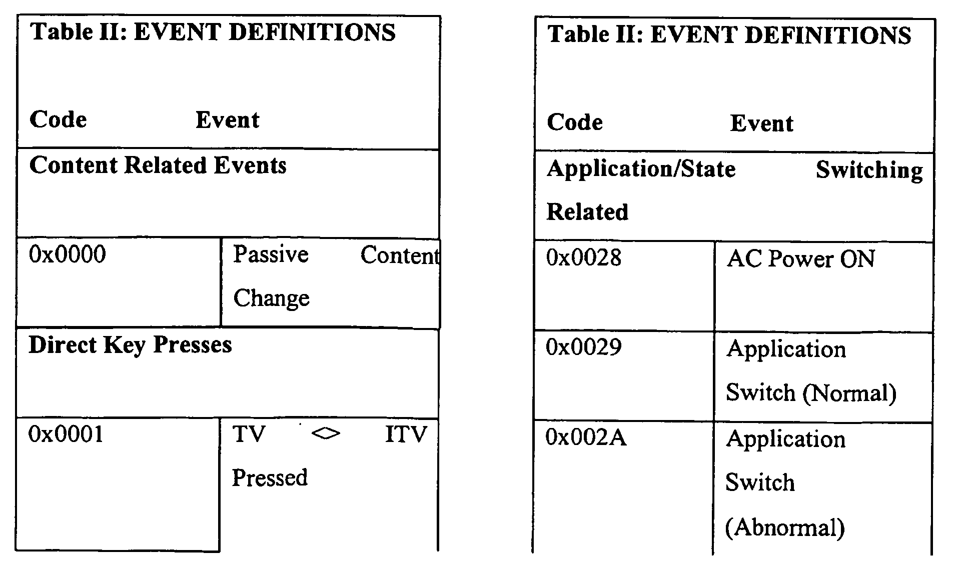

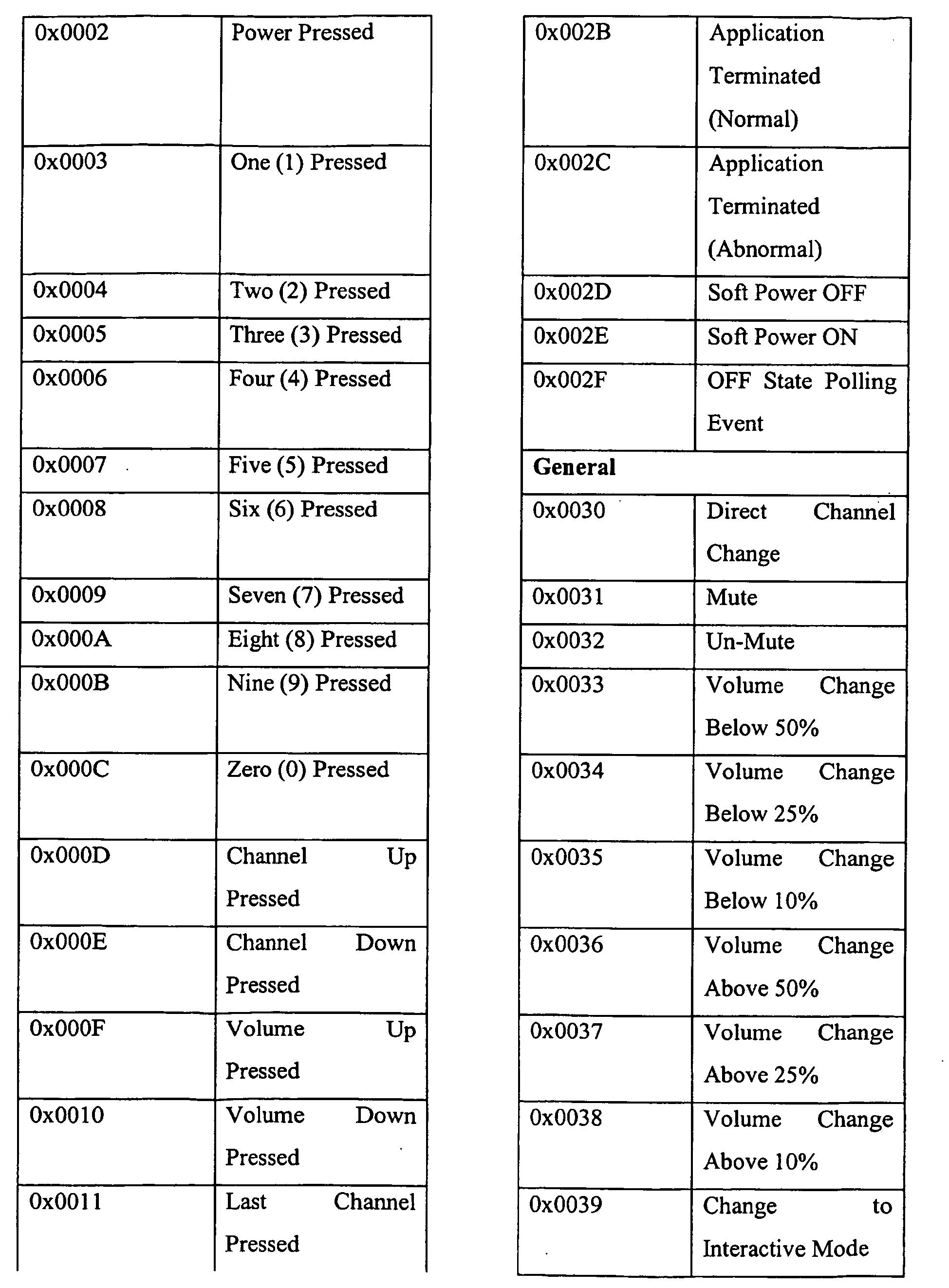

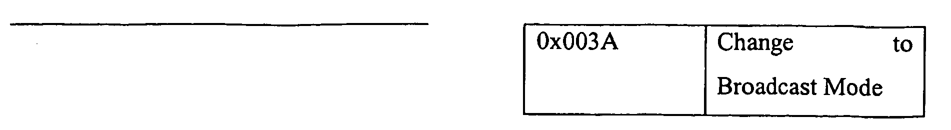

Note that Table II defines relative volume changes (e.g. "volume change below 50%," "volume change below 25%," etc.). Although the applications could capture the actual key presses that lead to these relative volume changes, that level of detailed information is of little use to system 20 operators. Also, capturing all that detail leads to more records and higher demands upon the transmission network 52 when those records are uploaded. Applications could also be configured to "filter" other unwanted details about other subscriber activities. For example, when subscribers "channel surf" by quickly flipping through a number of channels in a short period of time, the application could be configured not to record channel changes unless the subscriber paused for greater than a certain selected time period (e.g., 15 to 30 seconds). Again, this eliminates information of little use and decreases network traffic.

Table III defines a small portion of a sample global channel identification table that proposes codes for identifying national and local broadcasters. Such a table allows any application journalling events which occur while subscribers are viewing broadcast or cable television programs to identify the network carrying the programming content by using a subset of the global table II. In this way channel line-ups can be changed yet the identifier for a broadcast or cable network would stay the same. The use of this mapping scheme eliminates the need to map an ever-changing channel number to a network.

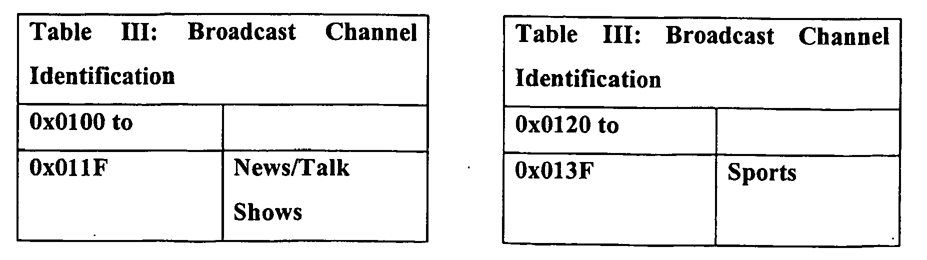

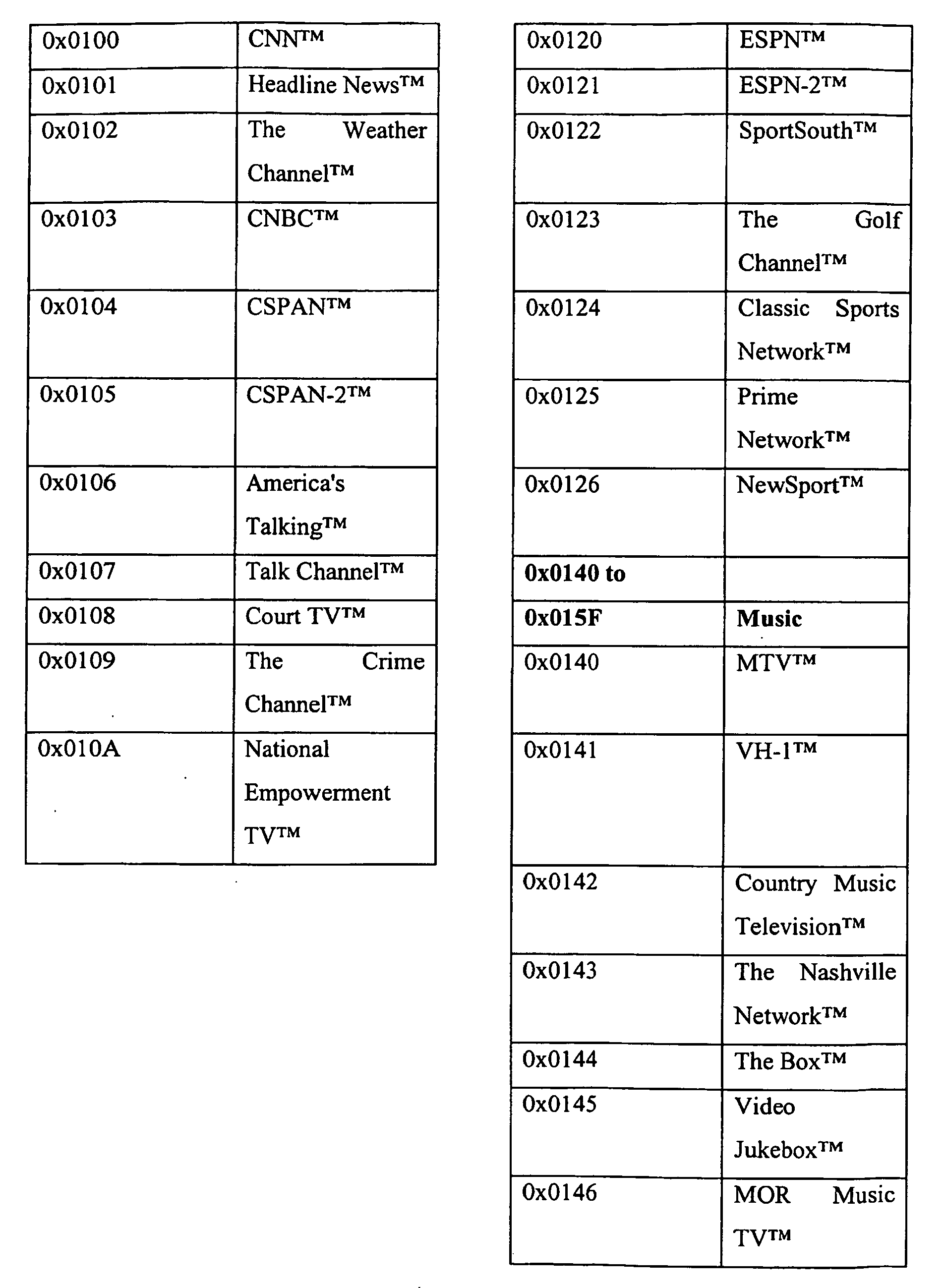

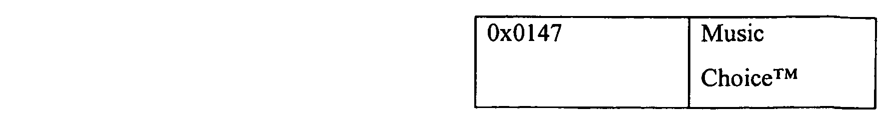

Table IV below shows some possible identification codes for particular applications. Note that each application could be programmed to insert its application ID code into the event record without accessing table IV. But by having each application access the table IV during the journalling process, the system's 20 ability to modify or add application ID codes easily is enhanced because such codes could be populated across system 20 by downloading an updated table IV. Providing for downloading of new tables increases the application footprint and system 20 complexity so tables can also be part of the application programming.

| **Table IV: Application Identifiers** | |
|---|---|
| **ID Code** | **Content** |
| 0x0000 | Operating System |
| 0x0001-F | Operating System Sub-Systems |
| 0x0010 | Application Manager |
| 0x0011 | Cable Television Application |
| 0x0012 | Clickstream Kernel |
| 0x0100 | EPG System |
| 0x0101 | Digital Pictures - Interactive Game |
| 0x0110-F | Viacom^{™} - MTV^{™} / Showtime^{™}, etc. |
| 0x1000 | Interplay Written Applications General ID |
| 0x1001 | Interplay Runtime Engine |
| 0x 1002 | Interplay Navigator |
| 0x1003 | Interplay VOD |
| 0x 1004 | Interplay NVOD |
| 0x1005 | Interplay TownGuide |
| 0x1100 | The Weather Channel^{™}, Weather On-Demand^{™} |
| 0x1101 | Worldspan - Travel On-Demand^{™} |
| 0x1102 | Lightspan - Educational Interactive Application |
| 0xFFFF | Missed Events Record |

Each particular application can simply reference the global application, event and channel identification tables (which periodically may be updated and then downloaded to STBs 30) in order to build an event record. Examples of application specific event records that may be created in this manner are shown in Tables V through VIII below and discussed in associated text.

A cable TV application 33 may tune analog or digital broadcast services. When a command to change channels is entered, the cable TV application 33 is invoked. The cable TV application 33 begins building an event record by inserting an application ID and time stamp into the record. Next, the application 33 determines the "event ID" by cross-referencing the command with the global event ID table II for the proper code. Then, the application 33 journals the "Channel ID." Although the Channel ID could simply be the number of the channel, that information means little. The fact that channel 6 was watched more than channel 7 has little or no meaning unless networks and, ultimately, the content delivered by those networks are associated with particular channels. Accordingly, the Channel ID may be a field, like a 16 bit field, which uniquely

| | |
|---|---|
| Rewind | 0x03 |
| Info (Help) Video or Screen Played | 0x04 |
| reserved | 0x05 |
| reserved | 0x06 |
| reserved | 0x07 |

Table VIII below shows the event record for the Electronic Program Guide (EPG) application 33. The EPG application 33 records the application ID, timestamp and event ID records just as do the above applications described in tables V-VII. Additionally, it has an application 33 state ID field that identifies which of the display screens were accessed by subscribers, as shown below.

| **Table VIII: Electronic Program Guide (EPG) Application Event Record** | **Size/ Data** |
|---|---|
| Application ID: See Application ID table IV | 16 bits |
| Timestamp: Identifies event time | 6 bytes |
| Event ID: See Global Event ID table for Syntax | 16 bits |
| Application State ID: See below for information tracked: | 8 bits |
| Initial Display Screen | 0x00 |
| Look Ahead Display 4 Hour | 0x01 |
| Look Ahead Display 8 Hour | 0x02 |
| Look Ahead Display 12 Hour | 0x03 |
| Look Ahead Display 16 Hour | 0x04 |
| Look Ahead Display 20 Hour | 0x05 |
| Look Ahead Display 24 Hour | 0x06 |
| Reserved | 0x07 |

Generally, similar information about other applications 33, such as home shopping, interactive gaming or any other new applications deployed over an interactive or other media delivery system, can be tracked in a similar fashion. Additionally, the journalling process may be used to track errors within the system 20, with clickstream kernel 36 journalling such errors using the same method as described above.

Over time, the journalling needs of system 20, or system 20 itself may evolve. Applications may be changed or new ones deployed. New events may become of interest to the operator of system 20. In order to provide flexibility for system 20, operators may download to STBs 30 new or replacement applications that will include the necessary processes for journalling all events of interest.

Assume that Mr. Smith turns on his interactive television at 7:30 p.m. to watch a half hour news program on channel 5, which corresponds to CNN for that region. At 8:00 p.m. he accesses the Navigator application to order a video through the video on demand application. He then accesses the Video on Demand application, which automatically begins playing a video at 8:04, pauses the video at 8:50 and begins playing again at 8:55 until it is completed at 9:45, at which point he turns off his interactive TV.

Mr. Smith's activities generate the following event records shown in table IX below (for convenience, multiple events occurring under a single application are grouped even though separate records are created in operation):

| **Table IX: Sample Event Records** | |
|---|---|
| **Cable Application Event Record 1 Content** | **Data** |
| Application ID: See table IV for application ID Code | 0x0011 |
| Timestamp: Identifies event time | 1/1/96 7:30:01 p.m. |
| Event ID: See Global Event ID table II to retrieve code for "power pressed" | 0x002 |

| **Cable Application Event Record 2 and 3 Content** | **Data** |
|---|---|
| Application ID: See table IV for application ID Code | 0x0011 |
| Timestamp: Identifies event time (Date will be same for second entry) | 1/1/96 7:30:03 p.m.; 8:00:01 p.m. |
| Event ID: See (1) global Broadcast Channel ID table III to determine that Channel 5 is CNN^{™} and locate code and (2) table II for an event ID code corresponding to an "iTV Press" by Mr. Smith. | 0x0100 0x0001 |

| **Navigator Application Event Record 4 Content** | **Data** |
|---|---|
| Application ID: See table IV for application ID Code | 0x1002 |
| Timestamp: Identifies event time for accessing each screen. | 1/1/96 |
| | 8:01:30 p.m. |
| Event IDs: See table II for event ID code that identifies an "enter" command by Mr. Smith to invoke this application. | 0x0021 |
| Application State ID Code: This shows Mr. Smith accessed the Main Menu | 0x01 |

| **Navigator Application Event Records 5-6 Content** | **Data** |
|---|---|
| Application ID: See table IV for application ID Code | 0x1002 |
| Timestamp: Identifies event time for accessing each screen. A | 1/1/96 |
| separate record is created for each activity, with a timestamp | 8:02:00 p.m.; |
| showing initiation of each activity. Each record will have the corresponding event and state. | 8:03:00 p.m.; |
| Event IDs: See table II for event ID code that identifies an | 0x0021 |
| "enter" command by Mr. Smith to invoke this application. | 0x0021 |
| Application State ID Codes: This shows Mr. Smith accessed | 0x03 |
| the Movies Sub-Menu and Movie Sub-menu list. | 0x05 |

| **Video on Demand Application Event Records 7-9 Content** | **Data** |
|---|---|
| Application ID: See Application ID table IV (same for each record). | 0x1003 |
| Timestamp: Identifies event time for each event recorded by | 1/1/96 |
| the application. (The day is the same for each record and each | 8:04:00 p.m. |
| time corresponds with the activity identified below). | 8:50:00 p.m. |
| | 8:55:00 p.m. |
| Event ID: See table II for event ID codes that identify Mr. | 0x0022 |
| Smith's play, pause and play commands. | 0x0024 |
| | 0x0022 |
| Application State ID Codes: These show Mr. Smith activated | 0x00 |
| this application, played, paused and then played again his | 0x01 |
| selected video. | 0x00 |

| **Cable Application Event Record 10 Content** | **Data** |
|---|---|
| Application ID: See table IV for application ID Code | 0x0011 |
| Timestamp: Identifies event time | 1/1/96 9:45:00 p.m. |
| Event ID: See Global Event ID table II to retrieve code for "power pressed" | 0x002 |

The variably sized event records are collected and then stored in one of two clickstream buffers 42 or 44. Capacity of each of the buffers may be statically provisioned or the system 20 may addressably download to particular STBs 30 an appropriate buffer 42 or 44 size. A buffer 42 or 44 may be an allocated, contiguous free area of STBs' 30 memory set aside for buffering event records only. Although advanced database techniques like link lists or record pointers could be used, they would increase the application footprint and complexity. Because buffer sizes of about 15 kB would probably accommodate the journalling needs of most applications, advanced database techniques need only be used for larger buffers. Buffers up to 15 kB should allow at least 4 to 8 hours of peak channel "surfing" between uploads (channel surfing typically will generate the most event records). In any event, empirical analysis of network use should determine the optimum buffer size.

Event records are directed to one of the two buffers 42 or 44, although a single or even more buffers could be used with the system 20. Conceivably, the system 20 could also be modified to upload event records in real time; however, that severely increases the possibility of instantaneous overloads in network traffic. Thus, system 20 preferably uses buffers 42 or 44 to buffer collected event records until they are upload.

Event records from a particular STB 30 may be uploaded in a format that assists in their transmission back through the distribution network 52 to the staging server 70. A header record may indicate the time the buffer 42 or 44 was first opened, the number of bytes in the buffer 42 or 44, the originating STB 30 by address, the version of the clickstream kernel 36 which generated the record and the type of data compression used on the following data (if any). This first header record may be of fixed length and uncompressed. Information following "Compression Type" may be compressed to save in transmission bandwidth. Table X below shows this general header format:

| **Table X: Buffer Header Record** | **Size** |
|---|---|
| Transaction Code | 8 bits |
| Clickstream Version Number | 8 bits |
| Timestamp | 6 bytes |
| Number of Bytes | 8 bits |
| STB Unique Address Most Significant | 16 bits |
| STB Unique Address Least Significant | 32 bits |
| Compression Type | 8 bits |

When (1) a buffer 42 or 44 fills, (2) an upload timer event expires or (3) upon command from the staging server 70, the clickstream processor 34 initiates an upload process. During that process the uploading buffer 42 is locked and subsequent event records are routed to and stored in the second buffer 44. When upload of buffer 42 is completed, records continue to buffer 44 until the next upload time, after which buffer 44 locks and records go to buffer 42. This cycle continues to repeat.

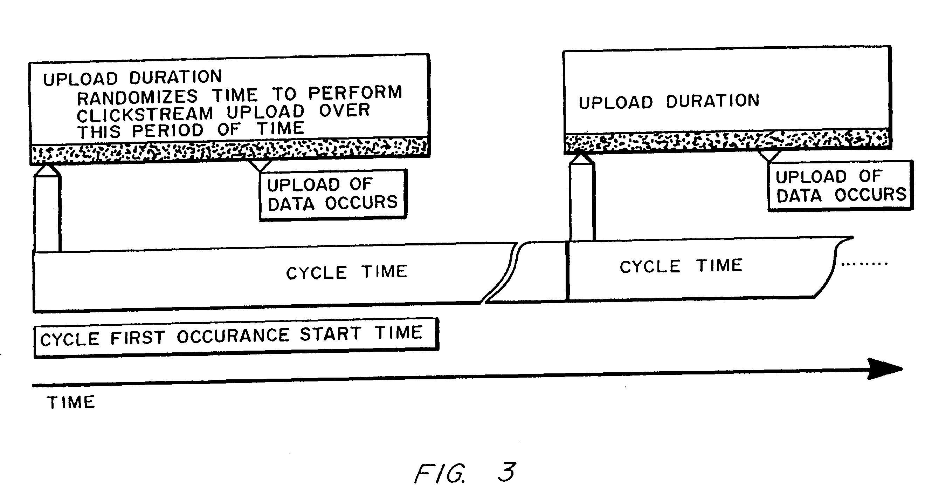

Figure 3 shows an upload cycle diagram illustrating one method of evenly distributing increased traffic on the network 52 caused by upload of event records. The clickstream upload cycle consists of several parameters that define a start time and a cycle over which the uploading of data occurs. The "first occurrence" parameter defines a starting time in history from which the cycle runs. The "cycle time" parameter defines the amount of time which elapses between periods of the upload cycle. When a cycle is complete the "upload duration" time starts, and the clickstream processor 34 of each STB 30 will randomise an exact upload time within the upload duration. This timing of upgrades will distribute the network load evenly over the entire upload duration period.

An example of the use of these parameters would be to define a period of time every day for STBs 30 within system 20 to upload data. Typically, the system 20 operator may want the data available every morning for analysis. Peak use of broadcast prime time or of interactive services will typically be from 7 p.m. until 12 p.m., during which time no uploads should occur in order to minimise the burden on the network 52. Beginning at 12 p.m., uploads of event records out of a buffer 42 or 44 would begin. In order to have all STBs 30 upload before 8 a.m., the STBs 30 may be divided into upload groups, e.g., 32, with each group uploading over a selected (e.g., 15 minute) period. To achieve this upload cycle, the following parameters are defined in the Figure 3 cycle in table XI:

| **Table XI: Upload Cycle Parameters** | |
|---|---|
| **Parameter** | **Definition** |
| Cycle_First_Occurance_Start_Time | 12:00am Jan 1, 1995 + "X" * 15 minutes. "X" staggers each upload group by 15 minutes; X=number of Groups |
| Cycle Time | 24 hours |
| Upload Duration | 15 minutes |

A total of four upload cycles will be defined for each group of STBs 30, which allows for weekly uploads or any other combination of cycles to work around peak network 52 load times.

STBs 30 can be instructed as to their role in uploading by sending from staging server 70 appropriate commands that are handled by the clickstream upload controller 38. For instance, the following commands may be addressed and sent by staging server 70 to a single or group of STBs 30.

| **Table XII: Clickstream Upload Control Commands** | | | |
|---|---|---|---|
| **Octet#** | **Contents** | | |
| T 0 | Transaction Code MSB = 0x80 | | |
| T 1 | Transaction Code LSB = 0x10 | | |
| 0 | Clickstream Processor Version Number | | |
| 1 | Global Flag (b1) | Addressable Flag (b1) | Group Address - Denotes the group of STBs to field this 1 transaction (b5) |
| 2 | Collection On/Off Key | | Will turn clickstream collection On/Off to a STB or Group of STBs (non-Gobal only) |
| 3 | Perform Upload Now Key | | Will perform an upload on command. Will only upload on command if Global Flag is NOT set. |
| 4, | Suppress Uploand on Buffer Ful | | Will keep the STB or Group from uploading when buffer is full. The STB or Group will only upload on it's appointed upload cycle. |
| 5. | Upload_Cycle_Definition | | A STB will have 1 to 4 possible upload cycles defined. This will define any one of those cycles. |
| 6. | Cycle First Occurrence Start Time (Total b48) | | Year (b8) Defines the time for first upload in a cycle. |
| 7 | Cycle First Occurrence Start Time - Month (b8) | | |
| 8 | Cycle First Occurrence Start Time - Day (b8) | | |
| 9 | Cycle First Occurrence Start Time - Hour (b8) | | |
| A | Cycle First Occurrence Start Time - Minute (b8) | | |
| B | Cycle First Occurrence Start Time - Second (b8) | | |
| C | Upload Duration | | (Total b24) - Hours(0-24) (b8) Defines a duration of time over which the STB randomises upload start time. |
| D | Upload Duration | | - Minutes(0-59) (b8) |
| E | Upload Duration | | - Seconds(0-59) (b8) |
| F | Cycle Time | | (Total b32) - Days (0-14) (b8) Defines the periodicity (mean time) between uploads. |
| 10 | Cycle Time | | - Hours(0-24) (b8) |
| 11 | Cycle Time | | - Minutes(0-59) (b8) |
| 12 | Cycle Time | | - Seconds(0-59) (b8) |

Depending on how the system is configured, the commands instruct STBs 30 to: 1) define the cyclic upload for various groups of or even all STBs 30; 2) require STBs 30 to upload on command/polling control (addressable only); 3) suppress upload when a buffer 42 or 44 fills; or 4) turn on/off event record collection by particular or groups of STBs 30.

After the upload process triggers, each STB 30 typically initiates upload by first locking the buffer 42 or 44 to be uploaded and then compressing the contents of that buffer 42 or 44. A number of different compression techniques may be used, however, about 50% compression may be achieved with LZW compression utilities. Such compression substantially reduces the load on network 52 caused by numerous STBs 30 uploading event records. Compressed data is divided into transmission "transactions" or "packets" and packet headers are addressed to indicate packet identification, IP destination address, etc. The actual network connection can be initiated by the operating system for the particular STB 30. Persons skilled in the art will recognise that the type of and manner of invoking and implementing the network connection will vary depending upon the type of media delivery network over which system 20 is deployed.

For instance, the STB 30 can be configured to insert UDP/IP headers and trailers taken from the RFC 791 or RFC 768 specifications published by the ISO. Each data packet may have UDP/IP protocol built around a Level 1 pass-through header, such as shown in Table XIII below:

| **Table XIII: UDP/IP Protocol for Headers** | | | | |
|---|---|---|---|---|
| **IP Header** | | | | |
| IP Version | Header Length | Type of Service | Total Length | |
| Identification | | | Flags | Fragment Offset |
| Time to Live | Protocol | | Header Checksum | |
| Source IP Address | | | | |
| Destination IP Address | | | | |
| **UDP Header** | | | | |
| Source Port | | | Destination Port | |
| Length | | | Checksum | |

In the embodiment shown in the Figures, the clickstream processor 34 will identify a particular VSP -- Video Service Provider, which is an entity connecting to network 52 to distribute services -- like VSP 66 shown in Figure 4B, as the destination of these data packets. All of the data to be uploaded appears as "payload" to the STB 30, the signalling network 52, the network management controller 50, and the event capture process 71 on the staging server 70. After an appropriate header and trailer inserted at the STB 30, the upload data packet may have the format shown in Table XIV:

| **Table XIV: Clickstream Upload Data Packet** | |
|---|---|
| **Octet#** | **Contents** |
| T 0 | Transaction Code MSB = 0x80 |
| T 1 | Transaction Code LSB =0x18 |
| 0 | Clickstream Processor Version Number |
| 1 | Upload Sequence Number |
| 0x02 thr. 0xFA | Clickstream Upload Buffer Data Structure (as shown in Table I and X). The data may be broken up into as many reverse path transactions as necessary to complete data upload. |

Providing two buffers 42, 44 allows event record collection to continue during upload. Assuming buffer 42 is being uploaded, if the second buffer 44 fills during the upload process, a buffer overrun condition occurs. To account for such an occurrence, the buffer trailer record sent during upload from STBs 30 may denote such an error condition. The structure of the buffer trailer record may take the form as shown in Table XV below and include a time stamp, assigned application identification, length and upload code.

| **Table XV: Buffer Trailer Record** | **Size** |
|---|---|
| Timestamp | 6 bytes |
| Assigned Application ID | 16 bits |
| Number Bytes to Follow (length) | 8 bits |
| Upload Status Code | 8 bits |

These upload status codes identify the stage of the upload process at the time a buffer 42 or 44 overflow occurred. Thus, some possible upload codes could include: upload not used, upload in progress, upload completed but no acknowledgement received, upload completed but only partial acknowledgement received or no upload attempted. This will let the staging server 70 know that STB 30 event records are missing beginning at that time. Also, receiving a buffer overrun record informs the staging server 70 that buffer 42 or 44 sizes have not been set appropriately. Buffer 42 or 44 sizes can then be reset and released to the system 20 as an update or released to a particular STB 30 by sending it an appropriate command.

Note that the packetisation description above is for one embodiment of the system 20. However, generally, to upload collected event records, STBs 30 can initiate whatever "upstream" data transmission process used by the interactive, cable television or other media delivery system with which the system 20 is used. That process will upload the event records in the appropriate system format.

In any event, for system 20, clickstream data packets are uploaded to the staging server 70 over a slotted-ALOHA (a contention-based standard transport protocol) data transmitter of the STB 30. Data acknowledgements from the staging server 70 are sent; each is addressed to particular STBs 30. The frequency and period of data acknowledgements may be determined by considering network error rates, network packet error rates and causes of those types transmission errors.

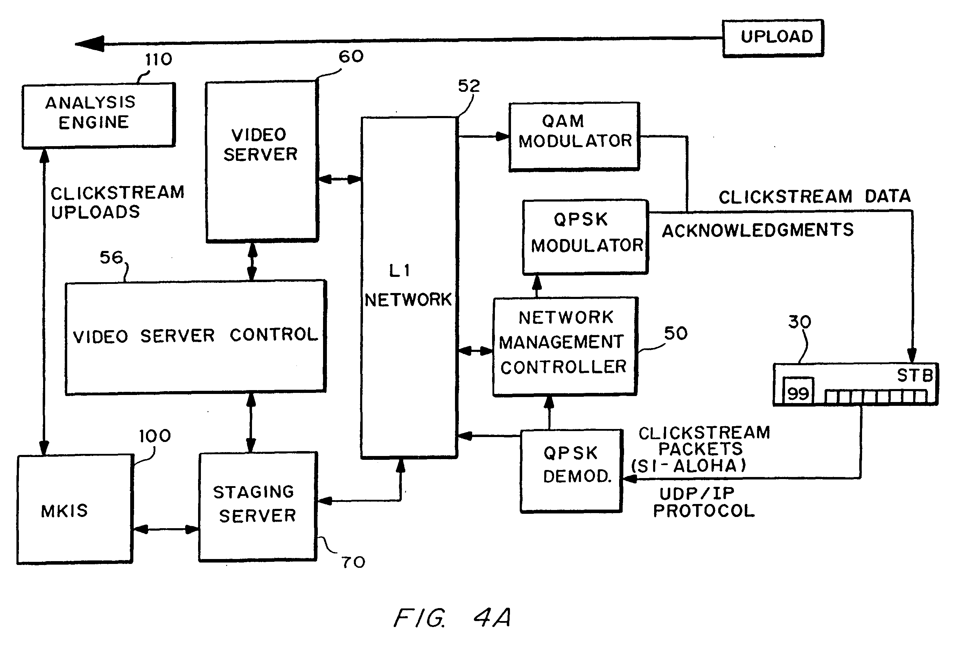

Figures 4A and 4B show in greater detail the clickstream data flow through the system 20. Briefly, Figure 4A shows that clickstream packets of event records are transmitted from each STB 30 to the network management controller 50, which acts as a video service provider router. From the network management controller 50, which manages traffic over network 52, packets are forwarded via the network 52, video server 60 and video server control 56 to the staging server 70, which couples to MKIS 100 and analysis engine 110. Thus, event records collected and buffered at STBs 30 are transmitted to the staging server 70 for collection and analysis.

Figure 4B shows this process in more detail and also describes an event records capture process 71 at staging server 70.

As noted, once a buffer 42 or 44 fills or the clickstream processor 34 decides to upload data for other reasons (time expiration, low system utilisation, commanded upload, etc.), the buffer 42 or 44 will be formatted, compressed and then uploaded through the system 20 to the staging server 70. The upstream data packets may travel from the network management controller 50 across the distribution network 52 to video server 60 through a process called IP ("Internet Protocol") tunnelling, which is essentially automatic IP routing based upon information in the packet payload. The same process can be used to route packets through network 52 directly to staging server 70 without going through video server 60. Figure 4B shows that, at video server 60, an L1 pass-through process 63 uses a VSP routing table 67 to associate destination IP addresses with corresponding tags inserted in the received data packets. This process re-directs the data packets to the application server 66 L1 pass-through process 63 by associating the tags with the appropriate listed destinationhere, the application server 66. The L1 pass-through process 63 on application server 66 performs a similar function with the data packets, routing them based on a payload identifier (transaction code or other) to an event record capture ("ECAP") open server process 71 on the staging server 70.

When the ECAP process 71 receives a clickstream data packet, it accepts the data packet and correlates the source address of the data packet with an upload session already in progress with a particular STB 30. If there is currently no upload in progress with that STB 30, then one is considered to be initiated. ECAP process 71 processes the upload of data in accordance with the particular protocol needed for the system 20. After receipt of all clickstream data packets associated with the upload from a particular STB 30, the ECAP process 71 sequences the packets into proper order (particular packets may have arrived out of their original transmission sequence because of transmission delays in network 52), decompresses the packets, eliminates transport overhead (e.g., trailers, headers, etc.) and stores them, such as in a flat file, for later analysis. At the end of a selected period, like 24 hours, the file is closed and a new one is opened, which allows a subsequent merge and parse process to batch process discrete files that cover discrete time periods. Immediately after initiation of and during the ECAP process 71, an operation log is opened to record information about the initiation and termination of each upload session and any errors.

As shown in Figure 5, staging server 70 will formulate and send a data acknowledgement to each STB 30 engaged in the upload process. One method of doing so is to send acknowledgements as addressable downstream level one pass-through transactions over network 52 to the STB 30. Such data acknowledgements provide redundant error correction because failure to receive them may alert STB 30 to a possible transmission error.

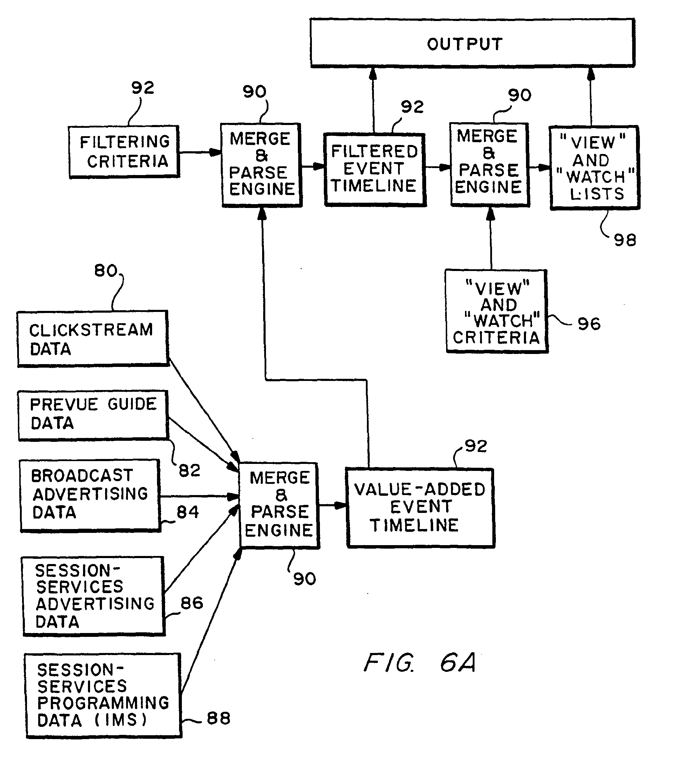

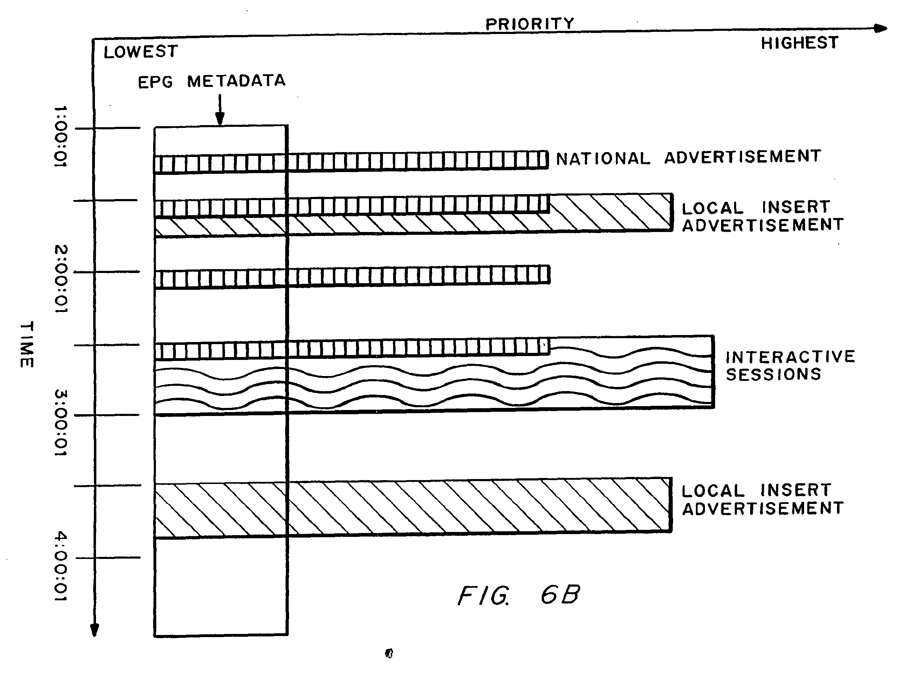

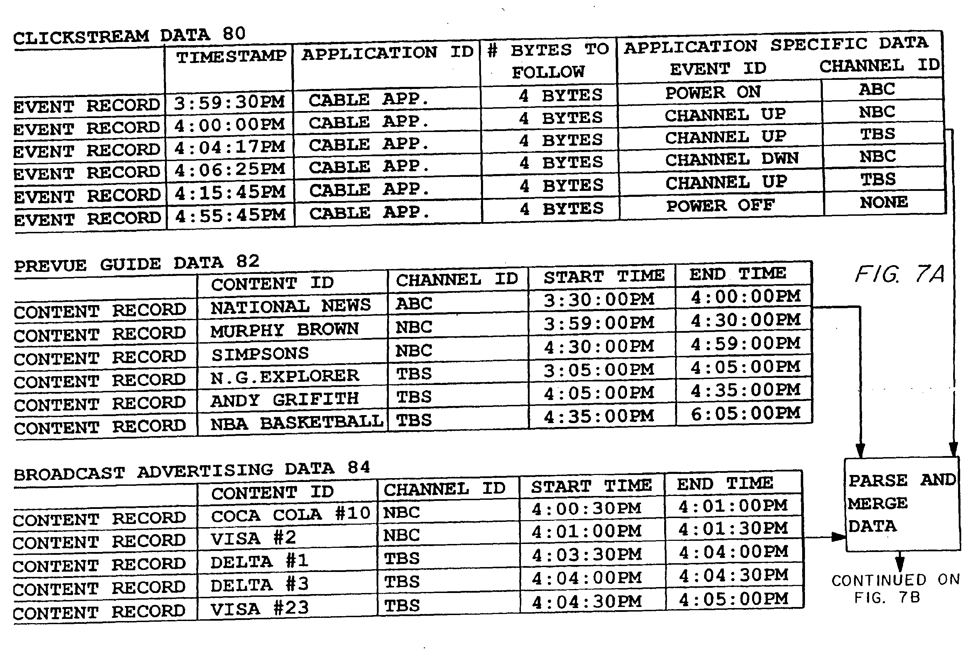

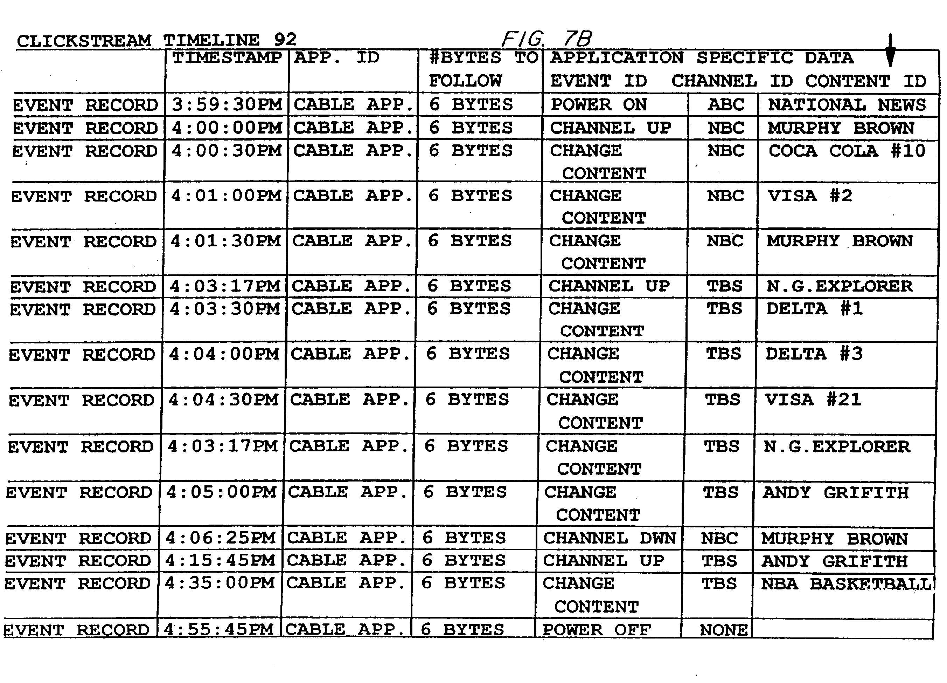

Figures 6A and 6B show an overview of the merging and parsing process and Figure 7 shows sample results following that process. Briefly, the aim of the merge and parse process is to merge each STB 30's event records with various "metadata." "Metadata" refers to (1) programming of virtually any type shown on system 20 including the time and broadcast or cable network providing such programming or (2) interactive applications invoked by subscribers. For instance, metadata includes the following sources of data: EPG broadcast programming schedule data 82, broadcast advertising schedule data 84, local advertising schedule data or session-services advertising schedule data 86 and session-services programming schedule data 88. (Session-services advertising refers to advertising inserted by video server 60 during particular interactive sessions with the subscriber that are the session-services programming).

Collectively, all of this data enters into a merge and parse engine 90 that creates an event timeline 92 for each STB 30. Merge and parse engine 90 may be deployed upon staging server 70 or the MKIS system 100. So deploying merge and parse engine 90 on staging server 70 allows collected event records to be merged and parsed. The resulting event timelines 92 can be sent to MKIS system 100 for further analysis.

Timeline 92 provides a snapshot of activity on a particular STB 30 for a selected period (e.g., 24 hours) or for a selected event -- for instance, a timeline 92 would be created for each STB 30 tuning to a particular show or shows (e.g., a pay per view fight) that may occur over a selected period. Timeline 92 is created by merging event records with metadata about programming available over the network for the selected time period.

To merge that data, proper priority must be assigned to data that otherwise may be conflicting. For instance, broadcast advertising data 84 may indicate that a certain national ad was run at Time A. On the other hand, if the system 20 is an interactive system and the interactive server provided a targeted advertisement ("ad") also at Time A, as indicated by session-services advertising data 86, that targeted ad was inserted over the national ad at Time A. Thus, by assigning session-services advertising data 86 a priority higher than national broadcast advertising data 84, the merge and parse engine 90 is able to create an accurate timeline 92 of programming delivered to a particular STB 30. Similarly, even a traditional cable or wireless cable network requires priority assignments. Typically, local cable operators typically are allowed to insert local ads over certain national ads (assuming they can sell that local ad time).

Figure 6B depicts such priority assignments. Figure 6B shows several sources of data, such as EPG metadata, National and Local Insert ad metadata and Interactive Sessions metadata. EPG metadata is usually very broad -- for instance, showing a football game on channel 1 from 1:00 to 4:00 p.m. Thus, EPG metadata is assigned a priority lower than that of national ad metadata because a particular national ad will be overlaid into a particular time slot broadly defined by the EPG. In turn, local insert ad metadata trumps national ad metadata because the national ad metadata may not account for situations where a local network or affiliate inserts a local ad over the national ad scheduled for a particular timeslot. Finally, interactive sessions metadata, which reflects subscriber selections, has the highest priority as it shows the subscriber stopped watching a particular channel and instead invoked an interactive session.

Applying these priority rules produces a timeline 94 for each subscriber. Additional filtering criteria 94 are applied by the merge and parse engine 90 in order to generate a further refined timeline 94, as depicted in Figure 6A. For example, event records may include such highly granular and specific information as the number of volume ups or channel ups that a particular subscriber entered. One set of filtering criteria 94 may ensure that the timeline 92 includes only channels that were viewed for more than a threshold (e.g., 15 seconds) time period. This eliminates any very fast channel changes made by the subscribers, thereby simplifying the event timeline 92 because event records that do not meet the criteria 94 are filtered out of the event timeline 92.

Merge and parse engine 90 also may apply other criteria to the filtered timeline 94 (or the original timeline 92), as shown in Figure 6. Specifically, advertisers may wish to apply "view" and "watch" criteria 96. This criteria 96 will identify those programs and advertisements that are "viewed" by subscribers for less than a certain threshold amount of time. Programming seen by subscribers for more than that threshold, would be identified as "watched" programming. For example, for a 30 second ad, the threshold might be 15 seconds. If a subscriber was tuned to a channel displaying that ad for less than 15 seconds he would be deemed to have simply "viewed" that ad; on the other hand, if the subscriber was tuned to the channel carrying that ad for 25 seconds of the ad's length, he would be deemed to have "watched" it. This criteria 96 allows system 20 operators to charge more for "watched" ads versus those that are merely "viewed." Similar criteria can be applied against programming in order to more accurately gauge ratings. Thus, for a 30 minute program, if a user was tuned to that program for less than 10 minutes, the view and watch criteria 96 may decide that the program was only "viewed." In any event, applying the view and watch criteria 96, merge and parse engine 90 creates "view" and "watch" lists 98 that are useful for the system 20 operator and advertisers who contract with system 20 operator.

Note also that other criteria than simply how much time a tuned to a particular channel may be included in the view and watch criteria 96. For instance another criteria may be volume level. If a viewer was tuned to a channel for the full thirty second length of an ad but hit the mute button or changed the volume below a certain threshold for that ad, view and watch criteria 96 may classify that ad as a "viewed" ad.

Generally, merging and parsing should be done on discrete segments of data, such as 24 hour segments, as soon as possible in order to minimise the occurrence of un-resolved events. In other words, discrete events are simply pieces of the entire picture. To analyse only several hours of clickstream event data would not allow determination of such things as programming "watched" versus "viewed."

Figure 7 shows a sample merge of event records or clickstream data 80, EPG data 82 from Prevue or a similar service and broadcast advertising data 84 that creates a clickstream timeline 92, which shows both the channels selected by a subscriber and the content displayed on those channels while the subscriber watched them.

A timeline 94 for each STB 30 is built and uploaded by staging server 70 to the MKIS database 100 or a third party analysis engine and database 110, either of which may store demographics and be used to run queries against the event timelines 94 and those demographics. Combining the timelines 94 with demographics information allows for even more detailed and granular information about subscribers and their viewing habits. For instance, consider the following examples:
- Example 1: Widget Co. has ten different advertisements that it has been running on system 20. Widget Co. wishes to know whether subscribers are "viewing" or "watching" particular ads. Because of the detailed information captured by the system 20 of the present invention, a query can be formulated to determine (a) which subscribers "watched" particular 30 second advertisements for greater than 15 seconds versus (b) which subscribers simply "viewed" the ad, for less than 15 seconds.
- Example 2: When event timelines 94 (or view and watch lists 98) are loaded into MKIS 100 or analysis engine 110, the same query can be run for a particular demographic group. For instance, Widget Co. wishes to know which particular ads its primary customer base, baby boomers between ages 40 and 50 and with income over $50,000 per year, "watched" versus "viewed" their advertisements.

Obviously, the system 20 can also be modified to target ads to particular demographic households based on feedback from parsed and merged data. Then, event records occurring after those targeted ads are broadcast over system 20 can be checked to determine whether the particular demographic market targeted watched or viewed the advertisement.

## Claims

1. A method of collecting and processing information about subscriber selection and use of programming distributed over an interactive media delivery network (53) that allows duplex communication to a set top box coupled to a subscriber's display device, the method comprising the steps of:-
a) collecting information about subscriber selection and use of the distributed programming to the set top box,
b) merging the information to derive event timelines, describing the programming selected by a particular subscriber over a particular time period;
**characterised by**
c) the collecting step comprising:
i) identifying commands of interest selected from the subscriber during communication of the programming to the set top box; the selected command comprising an event associated with an application residing on the set top box;
ii) forming an event record comprising an application identification of the application residing on the set top box, an event of interest associated with the application identification, and a time when selecting the event of interest from the subscriber to the set top box;
and by the further steps of :
d) transmitting the event record to a merge processor (90) via the media delivery network (52); and,
e) merging the event record at the selected time with programming metadata describing programming available via the media delivery network at the selected time to derive an event timeline describing the selection and use of the distributed programming by the subscriber for a discrete time period.

2. A method according to claim 1 further comprising accessing a table in order to determine the identification code for the selected command.

3. A method according to claim 1 or claim 2 further comprising accessing a table in order to determine the application identifier.

4. A method according to any of claims 1 to 3 further comprising repeating claim 1 steps a) through c) to collect a plurality of event records and buffering the plurality of event records.

5. A method according to claim 4, further comprising merging a plurality of event records.

6. A method according to any of claims 1 to 5, wherein the programming metadata comprises data selected from the group consisting of: broadcast identification information, interactive application use information, national advertising information and local advertising information.

7. A method according to any of claims 1 to 6, wherein commands of interest are selected from the group consisting of: channel change commands, volume change commands, VCR commands, application invocation commands and application control commands.

8. A method according to any of claims 1 to 7, wherein the identifying step comprises correlating each command of interest with a global table comprising identification codes.

9. A method according to any of claims 1 to 8, further comprising filtering the event timelines in order to classify subscriber's selection and use of the distributed programming into at least two categories.

10. A method according to claim 9, wherein the first category comprises programming watched by a subscriber for greater than a selected threshold percent of the total program length.

11. A subscriber information system for collecting and processing information about subscribers' selection and use of programming distributed over an interactive media delivery network (52) that allows duplex communication to a set top box coupled to a subscriber's display device, the system (20) comprising:
a) collector processors (34) having means (36, 42, 44) to collect a plurality of event records, each event record comprising at least one of a selected command from a subscriber during communication of the programming to the set top box, and
b) a merge processor (90) to receive the event records, and arranged to derive event timelines (92), describing the selection and use of the distributed programming by the subscriber over a discrete time period;
**characterised in that**
the selected command comprises an event associated with an application residing on the set top box, and the event record comprises an application identification associated with the application, an event identification of the event of interest associated with the application identification and a time when selecting the event of interest,
c) the collector processors (34) are each part of the set top box (30) and include means (38, 40, 41) to transmit event records (80);
d) communications means (38,40,41) are connected to each set top box; and,
e) the merge processor (90) is connected to the communications means to receive the transmitted event records;
wherein the merge processor is arranged to form the event timeline (92) describing a subscriber's selection and use of distributed programming for a discrete time period by merging the event records (80) with programming metadata (82,84,86,88) describing programming available via the media delivery network at the selected time, the programming metadata comprising at least one of a content identification of the programming, a start time of the programming, an end time of the programming and a channel identification.

12. A subscriber information system according to claim 11, wherein the programming metadata (82,84,86,88) comprises data collected from at least two sources selected from the group consisting of: a broadcasting schedule source (82), a national advertising schedule source (84), a local advertising schedule source (86) and an interactive application use schedule source (88).

13. A subscriber information system according to claim 11 or claim 12, wherein each set top box (30) further comprises means for invoking a plurality of applications (32,33) by a subscriber.

14. A subscriber information system according to any of claims 11 to 13, wherein means for invoking each application (32, 33) comprises means for creating an event record (80) upon detection of one or more selected commands from the set top box.

15. A subscriber information system according to and of claims 11 to 14, wherein the set top box (30) includes a buffer (41,42) for means arranged to store the event records (80) before transmission.

16. A subscriber information system according to any of claims 11 to 15, wherein means coupled to or forming part of the merge processor means (100) are provided for storing demographics information about selected groups of subscribers.

17. A subscriber information system according to any of claims 11 to 16, further comprising an analysis engine (110) coupled to and arranged to correlate the event timelines (94) with demographics information describing the subscribers.

18. A subscriber information system according to any of claims 11 to 17, wherein the merge processor (90) apply filtering criteria (92) to the event records (80) to determine the programming watched by a subscriber for greater than a selected percent of the programming.

19. A subscriber information system according to any of claims 11 to 18, wherein each set top box (30) has a display device (99) for displaying delivered programming.

20. A subscriber information system according to any of claims 11 to 19, wherein a remote device is provided for the subscriber to control the set top box (30) in order to invoke and run a variety of applications (33) and the collector processor (34) is arranged to form event records (80) by :
a) identifying a code that corresponds to the command of interest selected from the subscriber; and
b) storing in a buffer (41,42), associated with the collector, an event record (80) further comprising:
i) the code corresponding to the command;

21. A computer program comprising computer program code means adapted, when the computer program is run on a computer, to perform the steps of the method of any one of claims 1 to 10, or to operate the subscriber information system of any of claims 11 to 20 with the provision of said computer program code means in the corresponding system elements.

22. A computer program as claimed in claim 21 and further comprising computer program code means adapted to:
a) program an application (33) to identify an identification code that corresponds to a command of interest entered by a selected subscriber during communication of programming information to a set top box, the application selected from a plurality of applications operating on a variety of interactive media delivery systems, standard or wireless cable television systems, satellite television systems or other media delivery systems that allow duplex communication to a set top box (30) coupled to a subscriber's display device;
b) determine an application identifier corresponding to the application to which the selected command of interest is addressed; and
c) create an event record (80) comprising:
i) the application identifier;
ii) the identification code corresponding to the selected command of interest; and
iii) a time when selecting the command of interest from the subscriber to the set top box,
wherein the media delivery network (52) is arranged to communicate at least one of programming content and the application to a plurality of media delivery systems (20).

## Patentansprüche

1. Verfahren zum Erfassen und Verarbeiten von Information über Teilnehmerauswahl und -nutzung von Programmierung, die über ein interaktives Medienbereitstellungsnetz (52) verteilt wird, das Duplexkommunikation mit einer Set-Top-Box ermöglicht, die mit einer Anzeigevorrichtung des Teilnehmers verbunden ist, wobei das Verfahren die folgenden Schritte umfasst:
a) Erfassen von Information über Teilnehmerauswahl und -nutzung der verteilten Programmierung für die Set-Top-Box,
b) Zusammenfassen der Information, um Ereigniszeitpläne abzuleiten, welche die Programmierung beschreiben, die von einem bestimmten Teilnehmer über einen bestimmten Zeitraum ausgewählt wurde;
**gekennzeichnet durch**
c) den Erfassungsschritt, der umfasst:
i) Identifizieren von Befehlen von Belang, die vom Teilnehmer während der Kommunikation der Programmierung für die Set-Top-Box ausgewählt wurden; wobei der ausgewählte Befehl ein Ereignis umfasst, das mit einer in der Set-Top-Box gespeicherten Anwendung zusammenhängt;
ii) Herstellung einer Ereignisliste, die eine Anwendungskennung der in der Set-Top-Box gespeicherten Anwendung, ein Ereignis von Belang, das mit der Anwendungskennung zusammenhängt, und eine Zeit umfasst, zu der das Ereignis von Belang vom Teilnehmer für die Set-Top-Box ausgewählt wurde,
und **durch** die weiteren Schritte:
d) Übertragen der Ereignisliste an einen Mischprozessor (90) über das Medienbereitstellungsnetz (52); und
e) Mischen der Ereignisliste zur ausgewählten Zeit mit Programmier-Metadaten, welche die über das Medienbereitstellungsnetz zur ausgewählten Zeit verfügbare Programmierung beschreiben, um einen Ereigniszeitplan abzuleiten, der die Auswahl und Verwendung der verteilten Programmierung **durch** den Teilnehmer für einen bestimmten Zeitraum beschreibt.

2. Verfahren nach Anspruch 1, darüber hinaus umfassend, auf eine Tabelle zuzugreifen, um den Identifikationscode für den ausgewählten Befehl zu bestimmen.

3. Verfahren nach Anspruch 1 oder 2, darüber hinaus umfassend, auf eine Tabelle zuzugreifen, um die Anwendungskennung zu bestimmen.

4. Verfahren nach einem der Ansprüche 1 bis 3, darüber hinaus umfassend, die Schritte a) bis c) von Anspruch 1 zu wiederholen, um mehrere Ereignislisten zu erfassen und die mehreren Ereignislisten zwischenzuspeichern.

5. Verfahren nach Anspruch 4, darüber hinaus umfassend, mehrere Ereignislisten zu mischen.

6. Verfahren nach einem der Ansprüche 1 bis 5, wobei die Programmierungs-Metadaten Daten umfassen, die aus der Gruppe ausgewählt sind, die besteht aus:
Rundfunkidentifikationsinformation, interaktive Anwendungsnutzungsinformation, nationale Werbeinformation und lokale Werbeinformation.

7. Verfahren nach einem der Ansprüche 1 bis 6, wobei Befehle von Belang aus der Gruppe ausgewählt werden, die besteht aus: Kanaländerungsbefehlen, Lautstärkeänderungsbefehlen, VCR-Befehlen, Anwendungsaufrufbefehlen und Anwendungssteuerbefehlen.

8. Verfahren nach einem der Ansprüche 1 bis 7, wobei der Identifizierungsschritt umfasst, jeden Befehl von Belang mit einer globalen Tabelle zu korrelieren, die Identifikationscodes umfasst.

9. Verfahren nach einem der Ansprüche 1 bis 8, darüber hinaus umfassend, die Ereigniszeitpläne zu filtern, um die Teilnehmerauswahl und -nutzung der verteilten Programmierung in mindestens zwei Kategorien einzuteilen.

10. Verfahren nach Anspruch 9, wobei die erste Kategorie eine Programmierung umfasst, die durch einen Teilnehmer länger als einen ausgewählten Schwellenprozentwert der gesamten Programmlänge angesehen wurde.

11. Teilnehmerinformationssystem zum Erfassen und Verarbeiten von Information über Teilnehmerauswahl und -nutzung von Programmierung, die über ein interaktives Medienbereitstellungsnetz (52) verteilt wird, das Duplexkommunikation mit einer Set-Top-Box ermöglicht, die mit einer Anzeigevorrichtung des Teilnehmers verbunden ist, wobei das System (20) umfasst:
a) Erfassungsprozessoren (34) mit Einrichtungen (36, 42, 44) zum Erfassen mehrerer Ereignislisten, wobei jede Ereignisliste mindestens einen ausgewählten Befehl von einem Teilnehmer während der Kommunikation der Programmierung für die Set-Top-Box umfasst, und
b) einen Mischprozessor (90), um die Ereignislisten aufzunehmen, und der dazu eingerichtet ist, Ereigniszeitpläne (92) abzuleiten, welche die Auswahl und Nutzung der verteilten Programmierung durch den Teilnehmer über einen bestimmten Zeitraum beschreiben;
**dadurch gekennzeichnet, dass**
der ausgewählte Befehl ein Ereignis umfasst, das mit einer in der Set-Top-Box gespeicherten Anwendung zusammenhängt, und die Ereignisliste eine Anwendungskennung, die mit der Anwendung zusammenhängt, ein Ereigniskennzeichen des Ereignisses von Belang, das mit der Anwendungskennung zusammenhängt, und eine Zeit umfasst, zu der das Ereignis von Belang ausgewählt wird;
c) die Erfassungsprozessoren (34) jeweils Teil der Set-Top-Box (30) sind und Einrichtungen (38, 40, 41) umfassen, um Ereignislisten (80) zu übertragen;
d) Kommunikationseinrichtungen (38, 40, 41) an jede Set-Top-Box angeschlossen sind; und
e) der Mischprozessor (90) an die Kommunikationseinrichtungen angeschlossen ist, um die übertragenen Ereignislisten aufzunehmen;
wobei der Mischprozessor dazu eingerichtet ist, den Ereigniszeitplan (92) zu bilden, der eine Teilnehmerauswahl und -nutzung der verteilten Programmierung für einen bestimmten Zeitraum beschreibt, indem die Ereignislisten (80) mit Programmier-Metadaten (82, 84, 86, 88) gemischt werden, welche die Programmierung beschreiben, die zur ausgewählten Zeit über das Medienbereitstellungsnetz verfügbar sind, wobei die Programmier-Metadaten ein Inhaltskennzeichen für die Programmierung, eine Startzeit für die Programmierung, eine Endzeit für die Programmierung und/oder eine Kanalkennung umfassen.

12. Teilnehmerinformationssystem nach Anspruch 11, wobei die Programmier-Metadaten (82, 84, 86, 88) Daten umfassen, die aus mindestens zwei Quellen erfasst wurden, die aus der Gruppe ausgewählt sind, die besteht aus: einer Rundfunkprogrammquelle (82), einer nationalen Werbeprogrammquelle (84), einer lokalen Werbeprogrammquelle (86) und einer interaktiven Anwendungsnutzungsprogrammquelle (88).

13. Teilnehmerinformationssystem nach Anspruch 11 oder 12, wobei jede Set-Top-Box (30) darüber hinaus Einrichtungen umfasst, um durch einen Teilnehmer mehrere Anwendungen (32, 33) aufzurufen.

14. Teilnehmerinformationssystem nach einem der Ansprüche 11 bis 13, wobei die Einrichtungen zum Aufrufen jeder Anwendung (32, 33) Einrichtungen zum Erstellen einer Ereignisliste (80) bei der Erfassung eines ausgewählten Befehls oder mehrerer ausgewählter Befehle von der Set-Top-Box umfassen.

15. Teilnehmerinformationssystem nach einem der Ansprüche 11 bis 14, wobei die Set-Top-Box (30) einen Pufferspeicher (41, 42) für Einrichtungen umfasst, die dazu eingerichtet sind, die Ereignislisten (80) vor der Übertragung zu speichern.

16. Teilnehmerinformationssystem nach einem der Ansprüche 11 bis 15, wobei Einrichtungen vorgesehen sind, die mit der Mischprozessoreinrichtung (100) verbunden sind oder einen Teil davon bilden, um demografische Informationen über ausgewählte Teilnehmergruppen zu speichern.

17. Teilnehmerinformationssystem nach einem der Ansprüche 11 bis 16, darüber hinaus eine Analysemaschine (110) umfassend, die dazu angeschlossen und eingerichtet ist, die Ereigniszeitpläne (94) mit den die Teilnehmer beschreibenden demografischen Informationen zu korrelieren.

18. Teilnehmerinformationssystem nach einem der Ansprüche 11 bis 17, wobei der Mischprozessor (90) dazu eingerichtet ist, Filterkriterien (92) an die Ereignislisten (80) anzulegen, um die Programmierung zu bestimmen, die von einem Teilnehmer länger als einen ausgewählten Prozentwert der Programmierung angesehen wurde.

19. Teilnehmerinformationssystem nach einem der Ansprüche 11 bis 18, wobei jede Set-Top-Box (30) eine Anzeigevorrichtung (99) zur Anzeige der bereitgestellten Programmierung besitzt.

20. Teilnehmerinformationssystem nach einem der Ansprüche 11 bis 19, wobei eine Fernsteuervorrichtung für den Teilnehmer zur Steuerung der Set-Top-Box (30) vorgesehen ist, um verschiedenartige Anwendungen (33) aufzurufen und ablaufen zu lassen, und wobei der Erfassungsprozessor (34) dazu eingerichtet ist, Ereignislisten (80) zu erstellen durch:
a) Identifizieren eines Codes, der dem vom Teilnehmer ausgewählten Befehl von Belang entspricht; und
b) Speichern einer Ereignisliste (80) in einem mit dem Erfassungsprozessor zusammenhängenden Pufferspeicher (41, 42), darüber hinaus umfassend:
i) das dem Befehl entsprechende Codewort.

21. Computerprogramm mit Computerprogrammcodeeinrichtungen, die dazu ausgelegt sind, wenn das Computerprogramm auf einem Computer abläuft, die Schritte des Verfahrens nach einem der Ansprüche 1 bis 10 durchzuführen, oder das Teilnehmerinformationssystem nach einem der Ansprüche 11 bis 20 zu betätigen, wobei die Computerprogrammcodeeinrichtungen in den entsprechenden Systemelementen vorgesehen sind.

22. Computerprogramm nach Anspruch 21 und darüber hinaus Computerprogrammcodeeinrichtungen umfassend, die dazu ausgelegt sind:
a) eine Anwendung (33) zu programmieren, um einen Kennungscode zu identifizieren, der einem Befehl von Belang entspricht, der von einem ausgewählten Teilnehmer während der Kommunikation zum Einprogrammieren von Information in eine Set-Top-Box eingegeben wurde, wobei die Anwendung aus mehreren Anwendungen ausgewählt ist, die mit verschiedenartigen interaktiven Medienbereitstellungssystemen, standardmäßigen oder drahtlosen Kabelfernsehsystemen, Satellitenfernsehsystemen oder anderen Medienbereitstellungssystemen arbeiten, die eine Duplexkommunikation mit einer Set-Top-Box (30) ermöglichen, die mit einer Anzeigevorrichtung des Teilnehmers verbunden ist;
b) eine Anwendungskennung zu bestimmen, die der Anwendung entspricht, an die der ausgewählte Befehl von Belang gerichtet ist; und
c) eine Ereignisliste (80) zu erstellen, die umfasst:
i) die Anwendungskennung;
ii) den Kennungscode, der dem ausgewählten Befehl von Belang entspricht; und
iii) eine Zeit, zu welcher der Befehl von Belang vom Teilnehmer für die Set-Top-Box ausgewählt wurde,
wobei das Medienbereitstellungsnetz (52) dazu eingerichtet ist, den Programmierinhalt und/oder die Anwendung mehreren Medienbereitstellungssystemen (20) mitzuteilen.

## Revendications

1. Procédé de collecte et de traitement d'information concernant la sélection et l'utilisation par l'abonné d'une programmation distribuée sur un réseau de distribution de médias interactifs (53) qui permet une communication en duplex avec un boîtier décodeur couplé à un dispositif de visualisation de l'abonné, le procédé comprenant les étapes consistant à :
a) collecter de l'information concernant la sélection et l'utilisation par l'abonné de la programmation distribuée au boîtier décodeur,
b) fusionner l'information pour élaborer des profils temporels d'événements, décrivant la programmation sélectionnée par un abonné particulier au cours d'un intervalle de temps particulier ;
**caractérisé par le fait que**
c) l'étape de collecte comprend :
(i) l'identification d'ordres d'intérêt sélectionnés par l'abonné pendant la communication de la programmation au boîtier décodeur ; l'ordre sélectionné comprenant un événement associé à une application qui réside dans le boîtier décodeur ;
(ii) la formation d'un enregistrement d'événement comprenant une identification d'application de l'application résidant dans le boîtier décodeur, un événement d'intérêt associé à l'identification d'application, et un instant de sélection de l'événement d'intérêt par l'abonné en relation avec le boîtier décodeur ;
et par les étapes supplémentaires suivantes consistant à :
d) émettre l'enregistrement d'événement vers un processeur de fusion (90) par l'intermédiaire du réseau de distribution de médias (52) ; et
e) fusionner l'enregistrement d'événement à l'instant sélectionné avec des méta-données de programmation décrivant une programmation disponible par l'intermédiaire du réseau de distribution de médias à l'instant sélectionné, pour élaborer un profil temporel d'événements décrivant la sélection et l'utilisation par l'abonné de la programmation distribuée, pour un intervalle de temps discret.

2. Procédé selon la revendication 1, comprenant en outre l'accès à une table dans le but de déterminer le code d'identification pour l'ordre sélectionné.

3. Procédé selon la revendication 1 ou la revendication 2, comprenant en outre l'accès à une table dans le but de déterminer l'identificateur d'application.

4. Procédé selon l'une quelconque des revendications 1 à 3, comprenant en outre la répétition des étapes a) à c) de la revendication 1 pour collecter une multiplicité d'enregistrements d'événements et pour enregistrer en tampon la multiplicité d'enregistrements d'événements.

5. Procédé selon la revendication 4, comprenant en outre la fusion d'une multiplicité d'enregistrements d'événements.

6. Procédé selon l'une quelconque des revendications 1 à 5, dans lequel les méta-données de programmation comprennent des données sélectionnées dans le groupe consistant en : information d'identification de diffusion, information d'utilisation d'application interactive, information de publicité nationale et information de publicité locale.

7. Procédé selon l'une quelconque des revendications 1 à 6, dans lequel des ordres d'intérêt sont sélectionnés dans le groupe consistant en : ordres de changement de canal, ordres de changement de volume, ordres de magnétoscope, ordres d'appel d'application et ordres de commande d'application.

8. Procédé selon l'une quelconque des revendications 1 à 7, dans lequel l'étape d'identification comprend la corrélation de chaque ordre d'intérêt avec une table globale comprenant des codes d'identification.

9. Procédé selon l'une quelconque des revendications 1 à 8, comprenant en outre le filtrage des profils temporels d'événements dans le but de classer en au moins deux catégories la sélection et l'utilisation par l'abonné de la programmation distribuée.

10. Procédé selon la revendication 9, dans lequel la première catégorie comprend la programmation regardée par un abonné pendant une durée supérieure à un pourcentage de seuil sélectionné de la longueur de programmation totale.

11. Système d'information d'abonné pour collecter et traiter de l'information concernant la sélection et l'utilisation par des abonnés d'une programmation distribuée sur un réseau de distribution de médias interactifs (52) qui permet une communication en duplex avec un boîtier décodeur couplé à un dispositif de visualisation de l'abonné, le système (20) comprenant :
a) des processeurs collecteurs (34) ayant un moyen (36, 42, 44) pour collecter une multiplicité d'enregistrements d'événements, chaque enregistrement d'événement comprenant au moins un d'un ordre sélectionné provenant d'un abonné pendant la communication de la programmation au boîtier décodeur, et
b) un processeur de fusion (90) pour recevoir les enregistrements d'événements, et agencé pour élaborer des profils temporels d'événements (92), décrivant la sélection et l'utilisation par l'abonné de la programmation distribuée, sur un intervalle de temps discret,
**caractérisé en ce que**
l'ordre sélectionné comprend un événement associé à une application résidant dans le boîtier décodeur, et l'enregistrement d'événement comprend une identification d'application associée à l'application, une identification d'événement de l'événement d'intérêt associée à l'identification d'application, et un instant de sélection de l'événement d'intérêt,
c) chacun des processeurs collecteurs (34) fait partie du boîtier décodeur (30) et comprend des moyens (38, 40, 41) pour émettre des enregistrements d'événements (80) ;
d) des moyens de communication (38, 40, 41) sont connectés à chaque boîtier décodeur ; et,
e) le processeur de fusion (90) est connecté aux moyens de communication pour recevoir les enregistrements d'événements émis ;
dans lequel le processeur de fusion est agencé pour former le profil temporel d'événements (92) décrivant la sélection et l'utilisation par un abonné de la programmation distribuée pour un intervalle de temps discret, en fusionnant les enregistrements d'événement (80) avec des méta-données de programmation (82, 84, 86, 88) décrivant la programmation disponible par l'intermédiaire du réseau de distribution de médias, au moment sélectionné, les méta-données de programmation comprenant au moins l'un d'une identification de contenu de la programmation, d'un instant de début de la programmation, d'un instant de fin de la programmation et d'une identification de canal.

12. Système d'information d'abonné selon la revendication 11, dans lequel les méta-données de programmation (82, 84, 86, 88) comprennent des données collectées à partir d'au moins deux sources sélectionnées dans le groupe consistant en : une source d'horaire de diffusion (82), une source d'horaire de publicité nationale (84), une source d'horaire de publicité locale (86) et une source d'horaire d'utilisation d'applications interactives (88).

13. Un système d'information d'abonné selon la revendication 11 ou 12, dans lequel chaque boîtier décodeur (30) comprend en outre un moyen pour permettre à un abonné de faire appel à une multiplicité d'applications (32, 33).

14. Système d'information d'abonné selon l'une quelconque des revendications 11 à 13, dans lequel un moyen pour faire appel à chaque application (32, 33) comprend un moyen pour créer un enregistrement d'événement (80) sous l'effet de la détection d'un ou' plusieurs ordres sélectionnés provenant du boîtier décodeur.

15. Système d'information d'abonné selon l'une quelconque des revendications 11 à 14, dans lequel le boîtier décodeur (30) comprend un tampon (41, 42) pour un moyen agencé pour stocker les enregistrements d'événements (80) avant l'émission.

16. Système d'information d'abonné selon l'une quelconque des revendications 11 à 15, dans lequel des moyens couplés aux moyens de processeur de fusion (100), ou faisant partie de ces derniers, sont incorporés pour stocker de l'information démographique concernant des groupes d'abonnés sélectionnés.

17. Système d'information d'abonné selon l'une quelconque des revendications 11 à 16, comprenant en outre un moteur d'analyse (110) couplé à de l'information démographique décrivant les abonnés, et agencé pour corréler les profils temporels d'événements (94) avec cette information démographique.

18. Système d'information d'abonné selon l'une quelconque des revendications 11 à 17, dans lequel le processeur de fusion (90) est agencé pour appliquer des critères de filtrage (92) aux enregistrements d'événements (80) pour déterminer la programmation regardée par un abonné pendant une durée supérieure à un pourcentage sélectionné de la programmation.

19. Système d'information d'abonné selon l'une quelconque des revendications 11 à 18, dans lequel chaque boîtier décodeur (30) a un dispositif de visualisation (99) pour visualiser la programmation distribuée.

20. Système d'information d'abonné selon l'une quelconque des revendications 11 à 19, dans lequel un dispositif situé à distance est incorporé pour permettre à l'abonné de commander le boîtier décodeur (30) afin d'appeler et d'exécuter une variété d'applications (33), et le processeur collecteur (34) est agencé pour former des enregistrements d'événements (80) en :
a) identifiant un code qui correspond à l'ordre d'intérêt sélectionné par l'abonné ; et
b) stockant dans un tampon (41, 42), associé au collecteur, un enregistrement d'événement (80) comprenant en outre :
i) le code correspondant à l'ordre ;

21. Programme d'ordinateur comprenant un moyen de code de programme d'ordinateur adapté, lorsque le programme d'ordinateur est exécuté sur un ordinateur, pour accomplir les étapes du procédé de l'une quelconque des revendications 1 à 10, ou pour faire fonctionner le système d'information d'abonné de l'une quelconque des revendications 11 à 20, avec l'incorporation dudit moyen de code de programme d'ordinateur dans les éléments de système correspondants.

22. Programme d'ordinateur selon la revendication 21 et comprenant en outre une structure de code de programme d'ordinateur adaptée pour :
a) programmer une application (33) pour identifier un code d'identification qui correspond à un ordre d'intérêt saisi par un abonné sélectionné pendant une communication d'information de programmation à un boîtier décodeur, l'application étant sélectionnée parmi une multiplicité d'applications fonctionnant sur une variété de systèmes de distribution de médias interactifs, de systèmes de télévision par câble standard ou sans fil, de systèmes de télévision par satellite ou d'autres systèmes de distribution de médias qui permettent une communication en duplex avec un boîtier décodeur (30) couplé à un dispositif de visualisation de l'abonné ;
b) déterminer un identificateur d'application correspondant à l'application à laquelle l'ordre d'intérêt sélectionné est adressé ; et
c) créer un enregistrement d'événement (80) comprenant :
i) l'identificateur d'application ;
ii) le code d'identification correspondant à l'ordre d'intérêt sélectionné ; et
iii) un instant auquel l'ordre d'intérêt est sélectionné par l'abonné au boîtier décodeur,
dans lequel le réseau de distribution de médias (52) est agencé pour communiquer au moins l'un d'un contenu de programmation et de l'application à une multiplicité de systèmes de distribution de médias (20).
